# EUROPÄISCHE PATENTSCHRIFT

(11) **EP 2 532 855 B1**
(45) Veröffentlichungstag und Bekanntmachung des Hinweises auf die Patenterteilung: **12.01.2022**
(21) Anmeldenummer: 12171095.8
(22) Anmeldetag: 06.06.2012
(51) Int. Cl.: F02B 29/04

(54) **WÄRMETAUSCHER**
HEAT EXCHANGER
ECHANGEUR THERMIQUE

(30) Priorität: 07.06.2011 DE 102011077141
(43) Veröffentlichungstag der Anmeldung: 12.12.2012
(73) Patentinhaber: MAHLE Behr GmbH & Co. KG, 70469 Stuttgart (DE)
(72) Erfinder: Eilemann, Dr. rer. nat. Andreas, 71729 Erdmannhausen (DE); Helms, Dipl.-Ing. (FH) Werner, 73730 Esslingen (DE); Hemminger, Roland, 73733 Esslingen (DE); Ignjatovic, Spasoje, 75428 Illingen (DE); Schienemann, Mark, 71686 Remseck (DE)
(74) Vertreter: Grauel, Andreas

(56) Entgegenhaltungen:
- WO-A1-2005/119155
- DE-A1-102009 053 884
- DE-B3-102009 050 258
- DE-C2- 19 515 530
- FR-A1- 2 856 747

## Beschreibung

Die Erfindung betrifft einen Wärmetauscher, der an einem Ansaugmodul eines Verbrennungsmotors befestigt ist, umfassend einen ersten und einen zweiten Kühlmittelkasten zwischen welchen sich ein Rippen-Rohr-Block erstreckt, wobei die Rohre des Rippen-Rohr-Blockes in jeweils einen Boden münden und der jeweils eine Boden dicht mit dem jeweiligen Kühlmittelkasten verbunden ist.

Um den Zielkonflikt aus Fahrleistung, Verbrauch und Emissionen im Kraftfahrzeug besser auflösen zu können, werden moderne Verbrennungsmotoren in immer stärkerem Maße durch vorgeschaltete Turbolader aufgeladen. Daraus ergeben sich steigende Anforderungen an die Ladeluftkühlung.

Zur Kühlung der Ladeluft eines Verbrennungsmotors sind im Wesentlichen zwei Verfahren bekannt. Bei dem ersten Verfahren wird einem, als direkten Ladeluftkühler ausgebildeten Wärmetauscher die von dem Turbolader komprimierte und erhitzte Ladeluft zugeführt, wobei diese Ladeluft mittels dem, durch die Bewegung des Kraftfahrzeuges auftretenden Fahrtwind abgekühlt wird.

Eine verbesserte Kühlleistung wird durch die Verwendung eines Wärmetauschers in Form eines indirekten Ladeluftkühlers erreicht, welcher aus zwei Kühlmittelkästen besteht, zwischen denen ein Rippen-Rohr-Block angeordnet ist, wobei eine Kühlflüssigkeit durch die Rohre des Rippen-Rohr-Blocks und die Kühlmittelkästen geführt ist. Der Rippen-Rohr-Block ist beidseitig von je einem Boden abgeschlossen, wobei die Böden Öffnungen zur Aufnahme der Rohre des Rippen-Rohr-Blockes aufweisen, durch die die Kühlflüssigkeit in den ersten und den zweiten Kühlmittelkasten fließt. Dabei weist der erste Kühlmittelkasten einen Kühlmittelzufluss und der zweite Kühlmittelkasten einen Kühlmittelabfluss auf.

Insbesondere die als indirekte Ladeluftkühler ausgebildeten Wärmetauscher werden üblicherweise nah am Verbrennungsmotor angebracht und erfordern eine optimierte Anpassung an den im Kraftfahrzeug zur Verfügung stehenden Bauraum. Dabei wird der Wärmetauscher im Allgemeinen über Flanschlösungen unter Verwendung von Form- und Flachdichtungen an einem Ansaugmodul des Verbrennungsmotors befestigt. Es ist auch bekannt, dass der Wärmetauscher durch eine Vercrimpung seines Bodens mit dem Ansaugmodul des Verbrennungsmotors an diesem befestigt ist. Auch sind unlösbare Verbindungen wie beispielsweise mittels Schweißen bekannt.

DE102009050258 B3 offenbart ein Beispiel für einen bekannten Wärmetauscher.

Der Erfindung liegt die Aufgabe zu Grunde, einen Wärmetauscher anzugeben, der an dem Ansaugmodul des Verbrennungsmotors befestigt ist, wobei bei minimalen Abmessungen des Wärmetauschers große Freiheitsgrade für die Formgestaltung des Wärmetauschers gegeben sind.

Erfindungsgemäß wird die Aufgabe dadurch gelöst, dass der erste und/oder der zweite Kühlmittelkasten, vorzugsweise den Wärmetauscher tragend, an dem Ansaugmodul des Verbrennungsmotors befestigt ist. Dies hat den Vorteil, dass die Abmessungen des Wärmetauschers minimiert werden können, wobei die Formgestaltung der Kühlmittelkästen vielfältig an den vorhandenen Bauraum nahe dem Verbrennungsmotor angepasst werden können. Der Wärmetauscher kann dabei komfortabel am Ansaugmodul des Verbrennungsmotors, vorzugsweise entweder am Ansaugkrümmer oder dem Zylinderkopfbereich, positioniert werden.

Erfindungsgemäß ist der erste und/oder der zweite Kühlmittelkasten über den Boden des Rippen-Rohr-Blockes gezogen und liegt an dem Ansaugmodul des Verbrennungsmotors an. Dadurch wird der gesamte Wärmetauscher durch den Kühlmittelkasten gehalten, wobei die Kühlmittelkästen optimal in ihrer Form an den, nahe dem Verbrennungsmotor vorhandenen Bauraum anpassbar sind.

In einer Ausgestaltung überragt mindestens eine seitliche Flanke des ersten und/oder zweiten Kühlmittelkastens den Boden, wobei das Ansaugmodul des Verbrennungsmotors zwischen der seitlichen Flanke und dem Boden eingreift. Dadurch, dass die seitliche Flanke das Ansaugmodul weit umfasst, wird gewährleistet, dass der Wärmetauscher sicher von dem Ansaugmodul gehalten wird. Dies wird insbesondere auch dadurch unterstützt, dass das Ansaugmodul in eine Aufnahme eingreift, welche von der seitlichen Flanke des ersten und/oder des zweiten Kühlmittelkastens und dem Boden gebildet ist.

In einer Variante ist die seitliche Flanke des ersten und/oder des zweiten Kühlmittelkastens mit dem Ansaugmodul des Verbrennungsmotors, vorzugsweise einem Gehäuse eines Saugrohres, verbördelt, insbesondere vercrimpt. Eine solche Verbördelung bzw. Vercrimpung nimmt wesentlich weniger Platz in Anspruch als eine Flanschlösung, so dass der Platzbedarf für einen solchen Wärmetauscher reduziert wird.

In einer Weiterbildung weist die seitliche Flanke mindestens eine Wellschlitzbördelung zur Befestigung des ersten oder des zweiten Kühlmittelkastens an dem Ansaugmodul auf. Durch diese Wellschlitzbördelung wird der Kühlmittelkasten mittels eines besonders einfachen und kostengünstig ausführbaren Verbindungsverfahrens an dem Ansaugmodul mechanisch arretiert.

Vorteilhafterweise ist das Ansaugmodul mindestens teilweise von einem Endbereich des Bodens umspannt, wobei dieser Endbereich sich annähernd parallel zu dem Abschnitt des ersten oder zweiten Kühlmittelkastens erstreckt, an welchen sich die seitliche Flanke anschließt. Dadurch wird die Passgenauigkeit des Ansaugmoduls in die von seitlicher Flanke und Endbereich des Bodens geschaffene Aufnahme verbessert und die Befestigung des Kühlmittelkastens an dem Ansaugmodul neben der Verbördelung durch eine annähernd vorhandene Formschlüssigkeit erhöht.

In einer weiteren Ausführungsform ist der Endbereich des Bodens mindestens mit dem parallel verlaufenden Abschnitt des ersten oder zweiten Kühlmittelkastens verlötet. Durch die Verlötung ist der Kühlmittelkasten dicht verschlossen, so dass ein Austritt des in dem Kühlmittelkasten enthaltenen Kühlmittels aus dem Kühlmittelkasten zuverlässig verhindert wird.

In einer Ausgestaltung ist zwischen dem Endbereich des Bodens und dem Ansaugmodul des Verbrennungsmotors zur Unterbindung der Ausströmung einer durch die Rippen des Rippen-Rohr-Blockes strömenden Ladeluft ein Dichtelement vorgesehen. Dieses Dichtelement begrenzt den Bereich des Wärmetauschers, durch den die Ladeluft, welche durch das Kühlmittel abgekühlt werden soll, hindurchströmt.

In einer besonders einfachen Ausführungsform ist das Dichtelement in das Ansaugmodul integriert oder eingelegt. Dabei kann das Dichtelement vorteilhafterweise als Gummidichtung oder Silikondichtung ausgebildet sein, welche entweder als separates Bauteil bei der Montage des Wärmetauschers einfach in den abzudichtenden Bereich eingelegt wird oder bereits bei der Herstellung des Ansaugmoduls an der entsprechenden Stelle außen am Ansaugmodul positioniert ist. Die Verwendung einer Gummidichtung erlaubt eine sehr kostengünstige Herstellung.

In einer anderen Variante zirkuliert in dem ersten und dem zweiten Kühlmittelkasten und den Rohren des Rippen-Rohr-Blockes als Kühlmittel eine Kühlflüssigkeit, wobei insbesondere der erste Kühlmittelkasten eine Trennwand aufweist, durch welche der erste Kühlmittelkasten in zwei Teilräume unterteilt wird, wobei der erste Teilraum als Verteilerraum und der zweite Teilraum als Sammelraum für die Kühlflüssigkeit dient. Durch die Unterteilung des ersten Kühlmittelkasten werden der Zufluss als auch der Abfluss des Kühlmittels in ein und dieselbe Richtung möglich, was ebenfalls zur Verringerung des von dem Wärmetauscher benötigten Bauraumes beiträgt, da die mit dem Zufluss und dem Abfluss in Verbindung stehenden Leitungen platzsparend im Motorraum des Kraftfahrzeuges verlegt werden können.

Die Erfindung lässt zahlreiche Ausführungsbeispiele zu. Eines davon soll anhand der in der Zeichnung dargestellten Figuren näher erläutert werden.

Es zeigt:
- Figur 1:: eine Prinzipdarstellung eines Ausführungsbeispiels für den erfindungsgemäßen Wärmetauscher,
- Figur 2:: ein Ausschnitt aus dem Wärmetauscher nach Figur 1,
- Figur 3:: eine Darstellung des ersten Bodens des Wärmetauschers nach Figur 1,
- Figur 4:: eine Darstellung des ersten Kühlmittelkastens des Wärmetauschers nach Figur 1,
- Figur 5:: eine Teilansicht einer Boden-Kühlmittelkasten-Verbindung,
- Figur 6:: ein Ausschnitt der Figur 5,
- Figur 7:: eine Ansicht eines Boden und eines Kühlmittelkasten,
- Figur 8:: eine Ansicht des auf den Boden aufgesetzten Kühlmittelkastens,
- Figur 9:: eine Teilansicht einer Boden-Kühlmittelkasten-Verbindung,
- Figur 10:: eine Teilansicht einer Boden-Kühlmittelkasten-Verbindung,
- Figur 11:: eine Teilansicht einer Boden-Kühlmittelkasten-Verbindung,
- Figur 12:: eine Ansicht des Kühlmittelkastens von der Seite,
- Figur 13:: eine Ansicht eines Bodens von unten,
- Figur 14:: eine Schnittdarstellung einer Boden-Kühlmittelkasten-Verbindung,
- Figur 15:: eine Schnittdarstellung einer Boden-Kühlmittelkasten-Verbindung,
- Figur 16:: eine Teilansicht einer Boden-Kühlmittelkasten-Verbindung,
- Figur 17:: eine Teilansicht einer Boden-Kühlmittelkasten-Verbindung, und
- Figur 18:: eine Ansicht eines Bodens von unten.

Gleiche Merkmale sind mit gleichen Bezugszeichen gekennzeichnet.

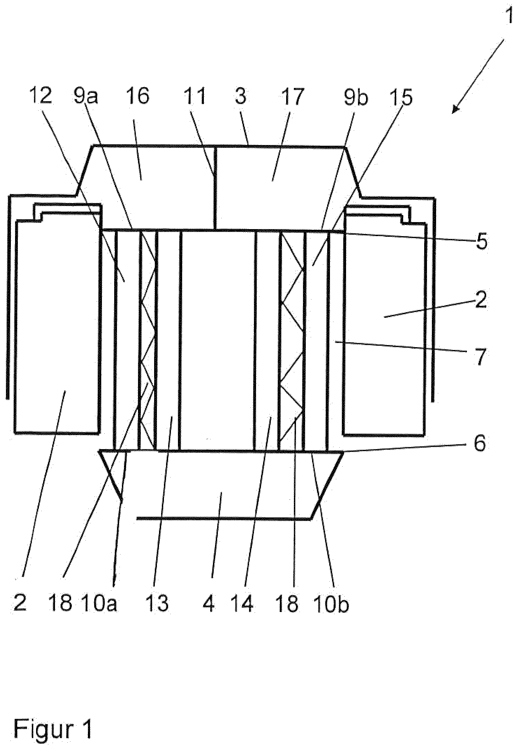

Figur 1 zeigt eine Prinzipdarstellung eines Ausführungsbeispiels eines Wärmetauschers 1 in Form eines indirekten Ladeluftkühlers, welcher an einem Ansaugmodul 2 eines nicht weiter dargestellten Verbrennungsmotors befestigt ist. Das Ansaugmodul 2 kann beispielsweise als Saugrohr ausgebildet sein.

Der Wärmetauscher 1 besteht aus zwei Kühlmittelkästen 3, 4, wobei jeder Kühlmittelkasten 3, 4 dicht von je einem Boden 5, 6 abgeschlossen ist. Zwischen den Böden 5, 6 ist ein Rippen-Rohr-Block 7 angeordnet, welcher mehrere Rohre 12, 13, 14, 15 aufweist, in welchen eine Kühlflüssigkeit strömt, die durch Öffnungen 9a im Boden 5 und Öffnungen 10a im Boden 6 in die Kühlmittelkästen 3 und 4 eintreten kann.

Der Kühlmittelkasten 3 ist dabei annähernd mittig durch eine Trennwand 11 getrennt, die den Kühlmittelkasten 3 in einen Verteilerraum 16 und einen Sammelraum 17 für das Kühlmittel unterteilt. Das Kühlmittel, welches aus einem nicht weiter dargestellten Kühlmittelkanal in den Verteilerraum 16 eintritt, wird durch die Öffnungen 9a in die Rohre 12, 13 des Rippen-Rohr-Blockes 7 eingespeist und tritt durch die Öffnungen 10a in den zweiten Kühlmittelkasten 4 ein. Dort wird das Kühlmittel umgelenkt und durch die Öffnungen 10b des Bodens 6 über die Rohre 14, 15 des Rippen-Rohr-Blocks 7 und die Öffnungen 9b im Boden 5 in den Sammelraum 17 des Kühlmittelkastens 3 zurückgeführt, wo es den Kühlmittelkasten 3 verlässt.

Das Kühlmittel in Form einer Kühlflüssigkeit, vorzugsweise Wasser oder Wasser-Kühlmittel-Gemisch, kühlt dabei eine, von einem nicht weiter dargestellten Turbolader komprimierte und aufgeheizte Ladeluft, welche den Rippen-Rohr-Block 7 zwischen den Rohren 12, 13, 14, 15 durchströmt. Um den Wärmeaustausch zwischen der Ladeluft und dem Kühlmittel zu erhöhen, sind zwischen den Rohren 12, 13, 14, 15 Rippen 18 angeordnet, welche die Rohre berühren. Durch diese Rippen 18 wird die Oberfläche der Rohre 12, 13, 14, 15 zur Aufnahme der Wärme aus der Ladeluft erhöht und die so aufgenommene Wärme dem Kühlmittel zugeführt, welches die Wärme aus dem Wärmetauscher 1 abtransportiert. Die so herunter gekühlte Ladeluft wird dann dem Verbrennungsmotor zugeführt.

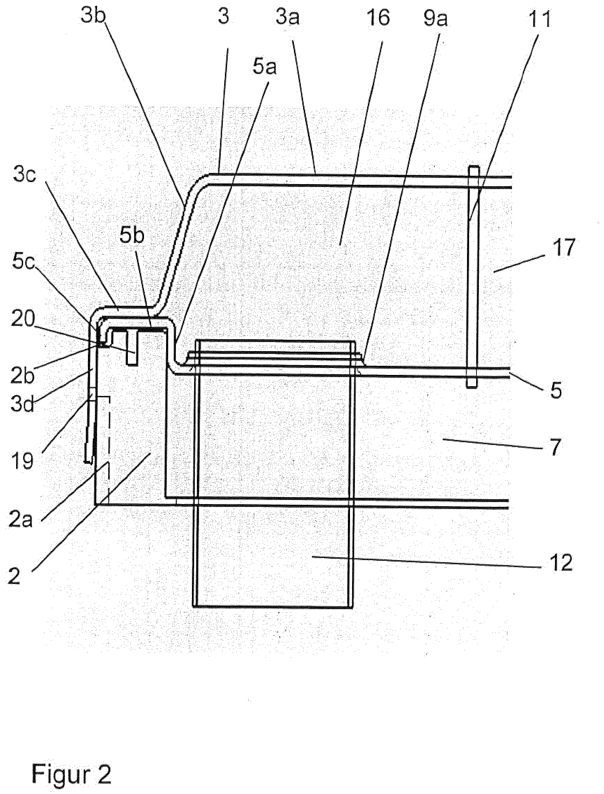

Wie aus Figur 1 ersichtlich sind der erste Kühlmittelkasten 3 und der diesen abdichtende Boden 5 in ihrer beidseitigen Randgestaltung so ausgebildet, dass diese einen Teil des Ansaugmoduls 2 oder das Ansaugmodul 2 umgreifen. In Figur 2 ist ein vergrößerter Ausschnitt eines Randbereiches des Wärmetauschers 1 im Bereich des ersten Kühlmittelkastens 3 dargestellt. Der als Abdeckung ausgebildete erste Kühlmittelkasten 3 weist dabei ein Seitenteil 3b auf, welches zu einem Grundteil 3a, das sich parallel zum ersten Boden 5 erstreckt, einen Winkel von größer 90° aufweist und in Richtung des ersten Bodens 5 gebogen ist. An dieses Seitenteil 3b schließt sich ein Abschnitt 3c des Kühlmittelkastens 3 an, welcher um einen Winkel von mehr als 90° gegenüber dem Seitenteil 3b gebogen ist und sich wiederum parallel zum ersten Boden 5 ausdehnt. Ausgehend von diesem Abschnitt 3c erstreckt sich eine seitliche Flanke 3d des Kühlmittelkastens 3 in einem Winkel von annähernd 90° zu dem Abschnitt 3c. Die seitliche Flanke 3d berührt das Ansaugmodul 2, welches zwischen der seitlichen Flanke 3d und dem Rippen-Rohr-Block 7 eingepasst ist. In der Nähe seines, von dem Abschnitt 3c abgewandten Endes umfasst die seitliche Flanke 3d eine Wellschlitzbördelung 19, welche zum Befestigen des Kühlmittelkastens 3 an dem Ansaugmodul 2 gegen das Ansaugmodul 2 gepresst wird, wobei der Kühlmittelkasten 3 im Bereich 2a des Ansaugmoduls 2 mit diesem verpresst wird und eine mechanische Befestigung des gesamten Wärmetauschers 1 über den ersten Kühlmittelkasten 3 an dem Ansaugmodul 2 erfolgt. Dabei trägt der erste Kühlmittelkasten 3 den gesamten Wärmetauscher 1.

Zur Abdichtung des ersten Kühlmittelkastens 3 ist der erste Boden 5 mit diesem verlötet. Dazu ist jeder Endbereich des wannenähnlich ausgebildeten ersten Bodens 5 als ein umgekehrtes U-Profil ausgebildet. Ein erster Schenkel 5a des U-Profils verläuft dabei in einem Winkel von annähernd 90° zu dem Boden 5 und erstreckt sich in Richtung des Kühlmittelkastens 3. Der sich an diesen ersten Schenkel 5a anschließende Basisbereich 5b, welcher wiederum um annähernd 90° gegenüber dem ersten Schenkel 5a weg von dem ersten Boden 5 gebogen ist, ist parallel zu dem Abschnitt 3c des ersten Kühlmittelkastens 3 ausgerichtet. Der Basisbereich 5b und der Abschnitt 3c liegen aneinander an und sind, ggf. flächig, miteinander verlötet, wodurch verhindert wird, dass das Kühlmittel aus dem ersten Kühlmittelkasten 3 austreten kann. Der zweite Schenkel 5c, welcher an den Basisbereich 5b anschließt und parallel zu dem ersten Schenkel 5a verläuft, ist verkürzt ausgebildet und greift in eine Ausnehmung 2b des Ansaugmoduls 2 ein. Der zweite Schenkel 5c wird dabei von der seitlichen Flanke 3d des ersten Kühlmittelkastens 3 überspannt.

Um zu verhindern, dass zwischen dem ersten Boden 5 und dem Ansaugmodul 2 Ladeluft aus dem Wärmetauscher 1 entweicht, ist in dem Ansaugmodul 2 eine mit einer Dichtung 20 ausgefüllte Nut vorgesehen, die annähernd parallel zum ersten Schenkel 5a des U-förmigen Profils verläuft.

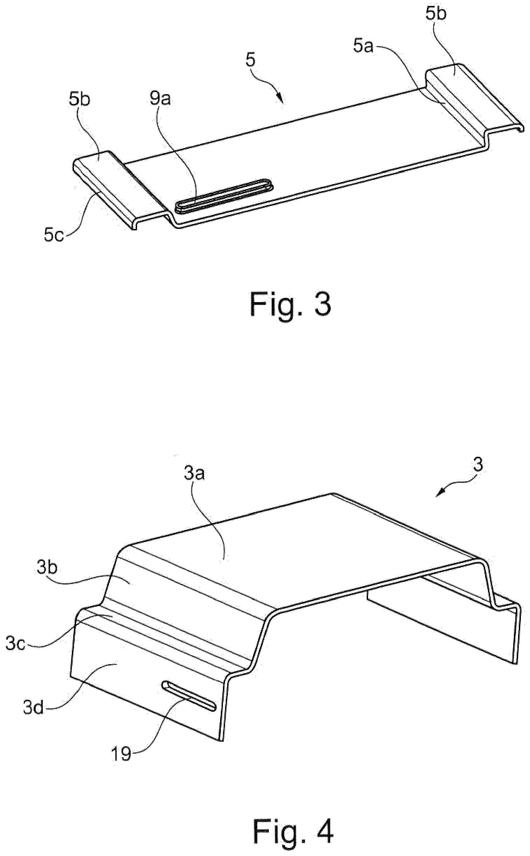

In Figur 3 ist noch einmal der gesamte erste Boden 5 dargestellt, während in Figur 4 der gesamte, als Abdeckung ausgebildete erste Kühlmittelkörper 3 dargestellt ist. Wie aus beiden Figuren 3, 4 ersichtlich, sind sowohl der erste Boden 5 als auch der erste Kühlmittelkasten 3 symmetrisch in ihren Endbereichen aufgebaut. Dabei wird der erste Kühlmittelkasten 3 nach dem Verlöten mit dem ersten Boden 5 auf das Ansaugmodul 2 aufgesetzt und durch Vercrimpen, d.h. Eindrücken der Wellschlitzbördelung 19 gegen das Ansaugmodul 2, mit diesem mechanisch verbunden. Beim Vercrimpen des ersten Kühlmittelkastens 3 mit dem Ansaugmodul 2 wird die Dichtung 20 gegen den Basisbereich 5b des Bodens 5 gepresst, wodurch ein dichter Abschluss zwischen dem Ansaugmodul 2 und dem Rippen-Rohr-Block 7 erreicht wird.

Der erläuterte Wärmetauscher 1 realisiert trotz Inanspruchnahme von nur wenig Bauraum im Kraftfahrzeug eine hohe Kühlleistung der Ladeluft.

Die Figur 2 zeigt ein Ausführungsbeispiel der Erfindung, bei welchem der Rippen-Rohr-Block durch einen Boden 5 gegenüber einem Kühlmittelkasten 3 abgedichtet verbunden ist. Der Boden 5 weist dabei einen Endbereich auf, der U-förmig gebildet ist und der mit dem Kühlmittelkasten verlötet ist.

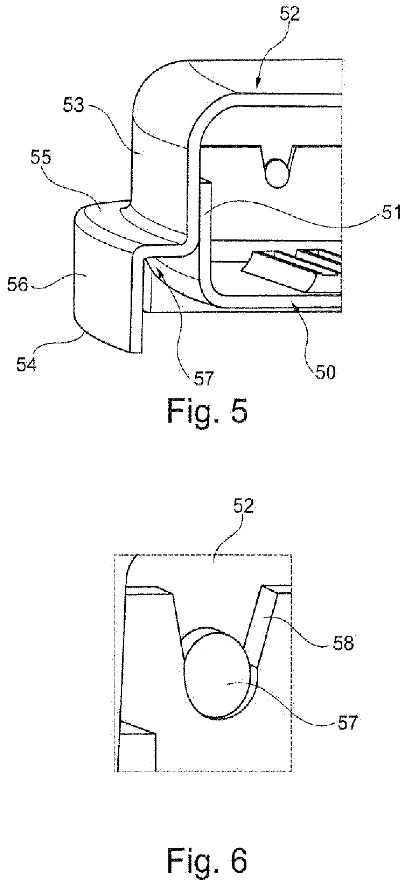

Bei alternativen Ausführungsbeispielen gemäß Figur 5 ist der Rohrboden 50 im Wesentlichen eben ausgebildet, wobei er eine umlaufende Wandung 51 aufweist, die im Wesentlichen senkrecht zur Ebene des Rohrbodens 50 ausgerichtet ist und die vom Rohrboden in Richtung zum Kühlmittelkasten weist. Der Kühlmittelkasten 52 ist mit einer äußeren ebenen Wandung ausgebildet, die eine umlaufende Wandung 53 aufweist, die im Wesentlichen parallel zur Ebene des Bereichs 512 ausgebildet ist. Zwischen dem Bereich 53 und dem Bereich 51 kann eine Lötverbindung vorgesehen sein, um den Kühlmittelkasten gegenüber dem Boden abzudichten.

Im Anschluss an den Bereich 53 ist ein L-förmiger Bereich 54 vorgesehen, der gebildet ist durch den Bereich 55 sowie den Bereich 56. Der Bereich 55 ist im Wesentlichen eben und parallel zu der Ebene des Rohrbodens 50 ausgerichtet, wobei der Bereich 56 im Wesentlichen parallel zum Bereich 53 ausgerichtet ist.

Der L-förmige Bereich bildet auf seiner Innenseite eine Aufnahme 57 für einen Fuß eines Gehäuses bzw. eines Ansaugmoduls sowie ggf. eine Dichtung zur formschlüssigen Verbindung des Kühlmittelkastens des Wärmeübertragers mit dem Ansaugmodul oder mit dem Gehäuse. Die formschlüssige Verbindung kann beispielsweise durch eine Wellenschlitzbördelung o.ä. vorgenommen werden.

Die Figur 6 zeigt ein Detail der Figur 5, wobei der Kühlmittelkasten 52 einen vorspringenden Bereich 57 aufweist, in den eine etwa U-förmige Aufnahme 58 des Rohrbodens eingreift. Der vorspringende Bereich 57 dient der Fixierung des Bodens 50 mit dem Kühlmittelkasten 52. Die Verbindung zwischen dem Bereich 56 des Kühlmittelkastens 52 und einem in diesem Raumbereich 57 angeordneten Fuß eines Gehäuses oder eines Ansaugmoduls kann beispielsweise mittels einer Wellenschlitzbördelung oder einer anderen Art einer Bördelung vorgenommen sein.

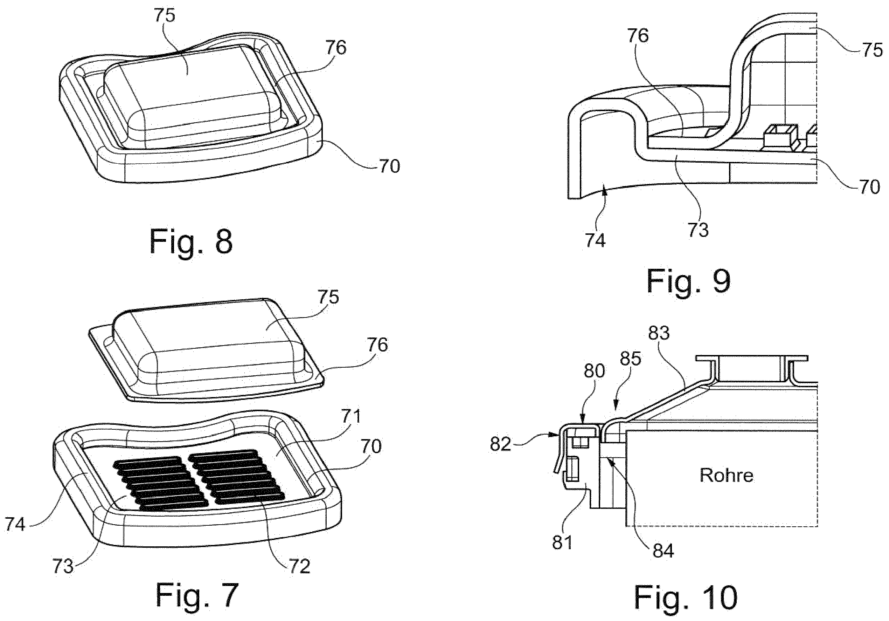

Die Figur 7 zeigt ein weiteres Ausführungsbeispiel, bei welchem der Boden 70 einen im Wesentlichen ebenen Bereich 71 aufweist, welcher die Rohröffnungen 72 enthält. Um die Rohröffnungen 72 herum ist ein Randbereich 73 ausgebildet, der im Wesentlichen eben ist. Außerhalb dieses Randbereichs 73 ist ein im Schnitt U-förmiger Bereich 74 vorgesehen, der zur Aufnahme von Befestigungsmitteln dient. Der Kühlmittelkasten 75 ist als auf fünf Seiten geschlossener Kasten ausgebildet, der einen Randbereich 76 aufweist, der im Wesentlichen eben ist. Die Ausgestaltung des Randbereichs 76 entspricht der Ausgestaltung des Randbereichs 73, so dass der Randbereich 76 auf den Randbereich 73 eben aufgesetzt und mit diesem verlötet werden kann, wie es in der Figur 8 zu erkennen ist.

Die Figur 9 zeigt diese Ausgestaltung noch einmal in einem Schnitt. Der Boden 70 mit einem ebenen Randbereich 73 weist an seinem äußeren Bereich den U-förmig umlaufenden Bereich 74 auf. Auf den Boden im Bereich des Randes 73 ist der Kühlmittelkasten 75 mit seinem ebenfalls ebenen Randbereich 76 derart aufgesetzt, dass der Randbereich 76 mit dem Randbereich 73 des Rohrbodens im Wesentlichen flächig verlötbar ist.

Der U-förmige Bereich 74 dient zur Aufnahme eines Flansches, beispielsweise eines Gehäuses oder eines Ansaugmoduls.

In Figur 10 ist eine solche Gestaltung gezeigt. Der U-förmige Bereich 80 des Rohrbodens dient zur Aufnahme des Fußes 81 eines Gehäuses oder eines Ansaugmoduls, wobei der seitliche Randbereich 82 zur Verbördelung des U-förmigen Bereichs des Rohrbodens mit dem Fuß 81 dient.

Im Ausführungsbeispiel der Figur 10 ist weiterhin zu erkennen, dass der Kühlmittelkasten 83 mit dem Rohrboden 84 mittels einer Steckverbindung 85 verbindbar ausgebildet ist. Dazu weist der Kühlmittelkasten Zungen an seinem Endbereich auf, die durch Öffnungen bzw. Schlitze im Rohrboden 84 eingreifen können und die beispielsweise durch Verdrehung oder Verformung eine formschlüssige Verbindung zwischen dem Boden 84 und dem Kühlmittelkasten 83 bewirkt, bevor die Lötverbindung die beiden Bauteile 83, 84 abgedichtet miteinander stoffschlüssig verbindet. Die formschlüssige Verbindung zwischen dem Boden 84 und dem Kühlmittelkasten 83 dient der Vorfixierung der Teile vor dem Lötprozess.

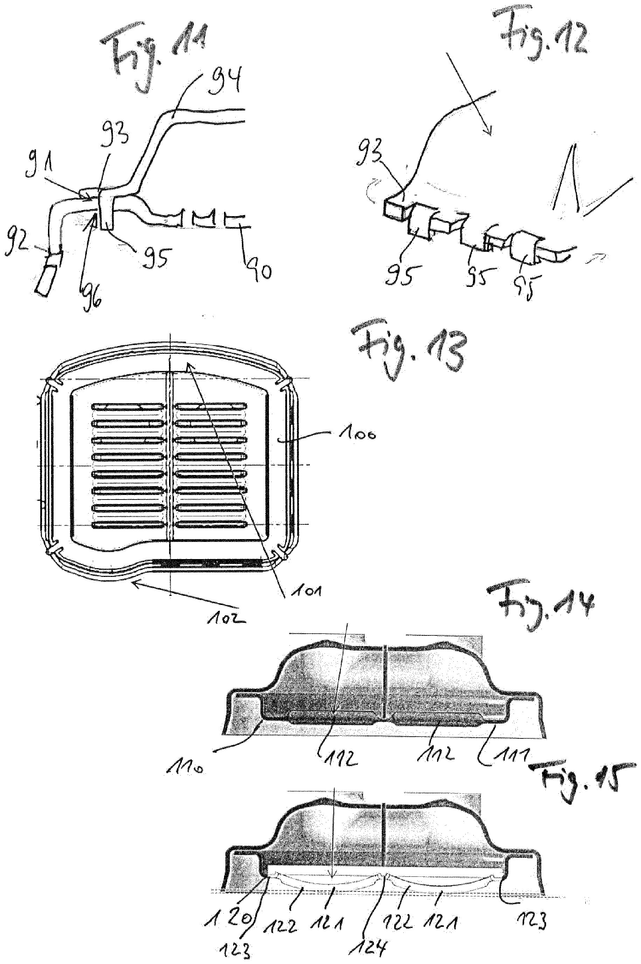

Die Figur 11 zeigt dies noch einmal in einem weiteren Ausführungsbeispiel. Der Rohrboden 90 weist einen ebenen Bereich 91 und einen seitlichen Wandbereich 92 auf. Der ebene Bereich 91 dient der Anlage eines ebenen Bereichs 93 des Kühlmittelkastens 94, wobei aus dem ebenen Bereich 93 Zungen 95 herausgestellt sind, die senkrecht zur Ebene des ebenen Bereichs 93 hervorstehen und die durch Öffnungen 96 des ebenen Bereichs 91 des Rohrbodens hindurch treten. Werden diese Zungen verbogen oder verdreht, so kann eine formschlüssige Verbindung zwischen dem Kühlmittelkasten 94 und dem Boden 90 erzeugt werden.

Die Figur 12 zeigt dies noch einmal in einer seitlichen Ansicht, wobei der ebene Bereich 93 durch Zungen 95 unterbrochen ist, die von der Ebene des ebenen Bereichs 93 in senkrechter Richtung hervorstehen.

Die Figur 13 zeigt einen Boden 100, der entgegen der rechteckigen Gestaltung zwei bogenförmige Bereiche 101, 102 aufweist. Diese bogenförmigen Konturen dienen der Steigerung der Druckfestigkeit des Rohrbodens. Dabei ist zu erkennen, dass der Bereich 101 sich am Rand über die gesamte Breite des Bodens wölbt bzw. derart gebogen ausgebildet ist und der Bereich 102 lediglich nur über etwa die halbe Erstreckung der Breite des Bodens ausgebildet ist.

In einem weiteren Ausführungsbeispiel gemäß Figur 14 ist der Rohrboden 110 mit einem ebenen flächigen Bereich 111 ausgebildet, in welchem die Öffnungen und die Durchzüge 112 für die Rohre des Wärmeübertragers vorgesehen sind. Der Bereich 111 ist dabei im Wesentlichen eben ausgebildet.

In einem alternativen Ausführungsbeispiel gemäß Figur 15 weist der Rohrboden 120 im Bereich der Durchzüge 121 eine Wölbungen 122 auf, derart, dass die Randbereiche 123 und der mittlere Bereich zwischen den Durchzügen 124 im Wesentlichen auf gleicher Ebene angeordnet sind. Die Durchzüge 121 sind hingegen konvex gewölbt in Richtung auf die Außenseite des Kühlmittelkastens.

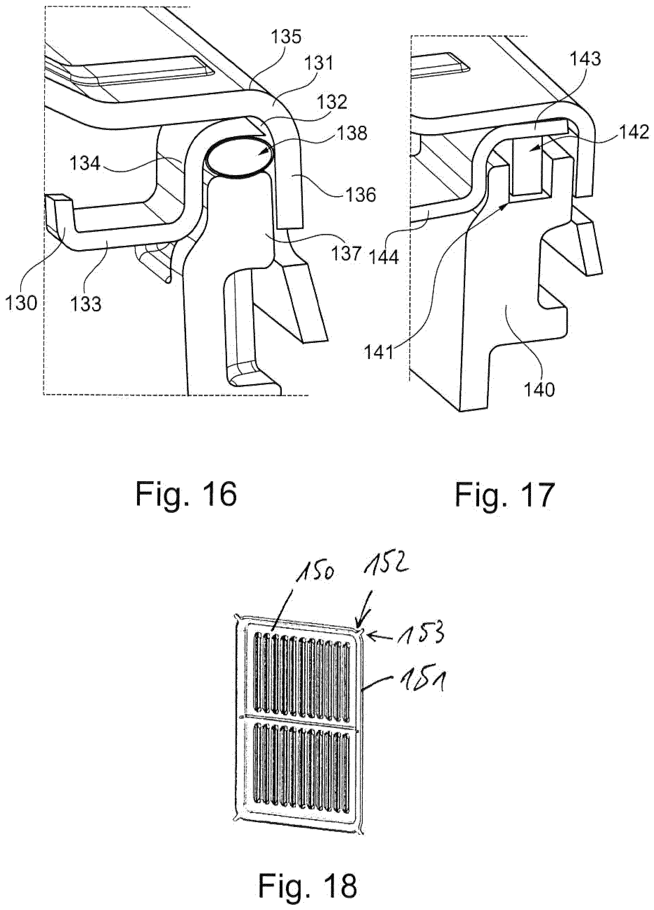

Die Figuren 16 und 17 zeigen weitere Ausführungsbeispiele einer Boden-Kühlmittelkasten-Verbindung, wobei zwischen dem Boden 130 und dem Kühlmittelkasten 131 eine Lötverbindung besteht und der Boden 130 gemeinsam mit dem Kühlmittelkasten 131 die U-förmige Kontur 132 zur Aufnahme einer Dichtung und eines Fußes eines Gehäuses oder eines Saugmoduls bildet. Dazu weist der Rohrboden 130, ausgehend von seiner ebenen umlaufenden Fläche 133, einen L-förmigen Bereich 134 auf, der gemeinsam mit einem L-förmigen Bereich 135 mit der Seitenwand 136 den U-förmigen Bereich zur Aufnahme des Fußes 137 des Gehäuses bzw. des Ansaugmoduls bildet. Auch ist in diesem U-förmigen Bereich zwischen dem Fuß 137 die Dichtung 138 angeordnet, so dass bei einer Verbördelung des Fußes 137 mit der Seitenwand 136 die Dichtung 138 verpresst wird.

In Figur 17 ist ein weiteres Ausführungsbeispiel gezeigt, bei welchem der Fuß 140 eine im Wesentlichen U-förmige Aufnahme 141 aufweist, in die die Dichtung 142 eingesetzt ist, so dass die Dichtung zumindest teilweise aus dem U-förmigen Bereich herausragt und gegen den Bereich 143 des Rohrbodens 144 verpresst wird.

Die Figur 18 zeigt ein weiteres Ausführungsbeispiel, bei welchem der Boden 150 mit dem Kühlmittelkasten 151 derart formschlüssig verbunden ist, dass der Kühlmittelkasten an seinen Eckbereichen Schlitze 152 aufweist, durch welche Zungen 153 des Rohrbodens hindurchgreifen. Derart kann eine Vorfixierung zwischen dem Boden und dem Kühlmittelkasten erzielt werden, so dass die Teile vor dem Löten lagesicher angeordnet werden können, so dass ein sicherer Lötvorgang durchgeführt werden kann.

## Patentansprüche

1. Wärmetauscher, der an einem die Ansaugluft führenden Gehäuse, vorzugsweise an dem Ansaugmodul (2), eines Verbrennungsmotors befestigt ist, umfassend einen ersten und einen zweiten Kühlmittelkasten (3, 4) zwischen welchen sich ein Rippen-Rohr-Block (7) erstreckt, wobei die Rohre (12, 13, 14, 15) des Rippen-Rohr-Blockes (7) in jeweils einen Boden (5, 6) münden und jeweils ein Boden (5, 6) dicht mit dem jeweiligen Kühlmittelkasten (3, 4) verbunden ist, **dadurch gekennzeichnet, dass** der erste und/oder der zweite Kühlmittelkasten (3,4), vorzugsweise den Wärmetauscher (1) tragend, an einem die Ansaugluft führenden Gehäuse, vorzugsweise an dem Ansaugmodul (2) des Verbrennungsmotors, befestigt ist, wobei der erste und/oder der zweite Kühlmittelkasten (3, 4) über den Boden (5, 6) des Rippen-Rohr-Blockes (7) gezogen ist und an dem Ansaugmodul (2) des Verbrennungsmotors anliegt.

2. Wärmetauscher nach Anspruch 1, **dadurch gekennzeichnet, dass** mindestens eine seitliche Flanke (3d) des ersten und/oder zweiten Kühlmittelkastens (3, 4) den Boden (5, 6) überragt, wobei das Ansaugmodul (2) des Verbrennungsmotors zwischen der seitlichen Flanke (3d) und dem Boden (5, 6) eingreift.

3. Wärmetauscher nach Anspruch 2, **dadurch gekennzeichnet, dass** die seitliche Flanke (3d) des ersten und/oder des zweiten Kühlmittelkastens (3, 4) mit dem Ansaugmodul (2) des Verbrennungsmotors, vorzugsweise einem Gehäuse eines Saugrohres, verbördelt, insbesondere vercrimpt, ist.

4. Wärmetauscher nach Anspruch 3, **dadurch gekennzeichnet, dass** die seitliche Flanke (3d) mindestens eine Wellschlitzbördelung (19) oder eine Burgzinnenbördelung oder eine sonstige Bördelung zur Befestigung des ersten oder des zweiten Kühlmittelkastens (3, 4) an dem Ansaugmodul (2) aufweist.

5. Wärmetauscher nach mindestens einem der vorhergehenden Ansprüche, **dadurch gekennzeichnet, dass** das Ansaugmodul (2) mindestens teilweise von einem Endbereich (5a, 5b, 5c) des Bodens (5) umspannt ist, wobei dieser Endbereich (5a, 5b, 5c) sich annähernd parallel zu dem Abschnitt (3c) des ersten oder zweiten Kühlmittelkastens (3) erstreckt, an welchen sich die seitliche Flanke (3d) anschließt.

6. Wärmetauscher nach Anspruch 5, **dadurch gekennzeichnet, dass** der Endbereich (5a, 5b, 5c) des Bodens (5) mindestens mit dem parallel verlaufenden Abschnitt (3c) des ersten oder zweiten Kühlmittelkastens (3) verlötet ist.

7. Wärmetauscher nach Anspruch 5 oder 6, **dadurch gekennzeichnet, dass** zwischen dem Endbereich (5a, 5b, 5c) des Bodens (5) und dem Ansaugmodul (2) des Verbrennungsmotors zur Unterbindung der Ausströmung einer, durch die Rippen (18) des Rippen-Rohr-Blockes (7) strömenden Ladeluft ein Dichtelement (20) vorgesehen ist.

8. Wärmetauscher nach Anspruch 7, **dadurch gekennzeichnet, dass** das Dichtelement (20) in das Ansaugmodul (2) integriert oder eingelegt ist.

9. Wärmetauscher nach mindestens einem der vorhergehenden Ansprüche, **dadurch gekennzeichnet, dass** in dem ersten und dem zweiten Kühlmittelkasten (3, 4) und den Rohren (12, 13, 14,15) des Rippen-Rohr-Blockes (7) als Kühlmittel eine Kühlflüssigkeit zirkuliert, wobei insbesondere der erste Kühlmittelkasten (3) eine Trennwand (11) aufweist, durch welche der erste Kühlmittelkasten (3) in zwei Teilräume (16, 17) unterteilt wird, wobei ein erster Teilraum als Verteilerraum (16) und der zweite Teilraum (17) als Sammelraum für die Kühlflüssigkeit dient.

## Claims

1. A heat exchanger which is fixed to a housing conveying the intake air, preferably to the intake module (2) of an internal combustion engine, comprising a first and a second coolant box (3, 4) between which a rib tube block (7) extends, wherein the tubes (12, 13, 14, 15) of the rib tube block (7) mouth into a respective bottom (5, 6) and respectively one bottom (5, 6) is tightly connected to the respective coolant box (3, 4), **characterised in that** the first and/or the second coolant box (3, 4), preferably carrying the heat exchanger (1), is fixed to a housing conveying the intake air, preferably to the intake module (2) of the internal combustion engine, wherein the first and/or the second coolant box (3, 4) is drawn over the bottom (5, 6) of the rib tube block (7) and abuts the intake module (2) of the internal combustion engine.

2. The heat exchanger according to claim 1, **characterised in that** at least one side flank (3d) of the first and/or the second coolant box (3, 4) projects beyond the bottom (5, 6), wherein the intake module (2) of the internal combustion engine engages between the side flank (3d) and the bottom (5, 6).

3. The heat exchanger according to claim 2, **characterised in that** the side flank (3d) of the first and/or the second coolant box (3, 4) is flanged together, in particular crimped, with the intake module (2) of the internal combustion engine, preferably a housing of a suction tube.

4. The heat exchanger according to claim 3, **characterised in that** the side flank (3d) has at least one corrugated slit flanging (19) or a merlon flanging or another flanging for fixing the first or the second coolant box (3, 4) to the intake module (2) .

5. The heat exchanger according to at least one of the preceding claims, **characterised in that** the intake module (2) is at least partially spanned by an end region (5a, 5b, 5c) of the bottom (5), wherein this end region (5a, 5b, 5c) extends approximately parallel to the section (3c) of the first or the second coolant box (3) which is joined by the side flank (3d).

6. The heat exchanger according to claim 5, **characterised in that** the end region (5a, 5b, 5c) of the bottom (5) is soldered to at least the parallel running section (3c) of the first or the second coolant box (3).

7. The heat exchanger according to claim 5 or 6, **characterised in that** a sealing element (20) is provided between the end region (5a, 5b, 5c) of the bottom (5) and the intake module (2) of the internal combustion engine in order to prevent the outflow of a charge air which flows through the ribs (18) of the rib tube block (7).

8. The heat exchanger according to claim 7, **characterised in that** the sealing element (20) is integrated or inserted into the intake module (2).

9. The heat exchanger according to at least one of the preceding claims, **characterised in that** a cooling liquid circulates in the first or the second coolant box (3, 4) and the tubes (12, 13, 14, 15) of the rib tube block (7) as a coolant, wherein in particular the first coolant box (3) has a separating wall (11) by which the first coolant box (3) is divided into two partial spaces (16, 17), wherein a first partial space serves as a distributor space (16) and the second partial space (17) serves as a collector space for the cooling liquid.

## Revendications

1. Echangeur de chaleur qui est fixé sur un carter guidant l'air d'admission, de préférence fixé sur le module d'admission (2) d'un moteur à combustion interne, ledit échangeur de chaleur comprenant un premier et un second réservoir de liquide de refroidissement (3, 4), réservoirs entre lesquels s'étend un bloc d'ailettes et de tubes (7), où les tubes (12, 13, 14, 15) du bloc d'ailettes et de tubes (7) débouchent respectivement dans un fond (5, 6), et un fond (5, 6) est respectivement relié, de manière étanche, au réservoir de liquide de refroidissement respectif (3, 4), **caractérisé en ce que** le premier et/ou le second réservoir de liquide de refroidissement (3, 4), de préférence supportant l'échangeur de chaleur (1), est fixé sur un carter guidant l'air d'admission, de préférence fixé sur le module d'admission (2) du moteur à combustion interne, où le premier et/ou le second réservoir de liquide de refroidissement (3, 4) est tiré sur le fond (5, 6) du bloc d'ailettes et de tubes (7) et vient en appui contre le module d'admission (2) du moteur à combustion interne.

2. Echangeur de chaleur selon la revendication 1, **caractérisé en ce qu'**au moins un flanc latéral (3d) du premier et/ou du second réservoir de liquide de refroidissement (3, 4) dépasse du fond (5, 6), où le module d'admission (2) du moteur à combustion interne s'engage entre le flanc latéral (3d) et le fond (5, 6).

3. Echangeur de chaleur selon la revendication 2, **caractérisé en ce que** le flanc latéral (3d) du premier et/ou du second réservoir de liquide de refroidissement (3, 4) est assemblé à bord tombé, en particulier serti, avec le module d'admission (2) du moteur à combustion interne, de préférence avec un logement d'un tuyau d'admission.

4. Echangeur de chaleur selon la revendication 3, **caractérisé en ce que** le flanc latéral (3d) présente au moins un bord tombé à rainure ondulée (19) ou un bord tombé crénelé, ou bien un autre bord tombé servant à la fixation du premier ou du second réservoir de liquide de refroidissement (3, 4) sur le module d'admission (2).

5. Echangeur de chaleur selon au moins l'une quelconque des revendications précédentes, **caractérisé en ce que** le module d'admission (2) est enserré au moins partiellement par une zone d'extrémité (5a, 5b, 5c) du fond (5), où cette zone d'extrémité (5a, 5b, 5c) s'étend presque parallèlement à la partie (3c) du premier ou du second réservoir de liquide de refroidissement (3), réservoir auquel se raccorde le flanc latéral (3d).

6. Echangeur de chaleur selon la revendication 5, **caractérisé en ce que** la zone d'extrémité (5a, 5b, 5c) du fond (5) est brasée au moins avec la partie (3c) du premier ou du second réservoir de liquide de refroidissement (3), ladite partie s'étendant parallèlement.

7. Echangeur de chaleur selon la revendication 5 ou 6, **caractérisé en ce que,** pour empêcher que s'échappe un air de suralimentation qui circule à travers les ailettes (18) du bloc d'ailettes et de tubes (7), il est prévu un élément d'étanchéité (20) placé entre la zone d'extrémité (5a, 5b, 5c) du fond (5) et le module d'admission (2) du moteur à combustion interne.

8. Echangeur de chaleur selon la revendication 7, **caractérisé en ce que** l'élément d'étanchéité (20) est intégré ou inséré dans le module d'admission (2).

9. Echangeur de chaleur selon au moins l'une quelconque des revendications précédentes, **caractérisé en ce qu'**un liquide de refroidissement, en tant moyen de refroidissement, circule dans le premier et dans le second réservoir de liquide de refroidissement (3, 4) et dans les tubes (12, 13, 14, 15) du bloc d'ailettes et de tubes (7), où en particulier le premier réservoir de liquide de refroidissement (3) présente une paroi de séparation (11) par laquelle le premier réservoir de liquide de refroidissement (3) est subdivisé en deux espaces partiels (16, 17), où un premier espace partiel sert de compartiment distributeur (16) et le second espace partiel (17) sert de compartiment collecteur pour le liquide de refroidissement.
